(19) Europäisches Patentamt
European Patent Office
Office européen des brevets

(11) **EP 4 625 597 A1**

(12) **EUROPEAN PATENT APPLICATION**

(43) Date of publication:
**01.10.2025 Bulletin 2025/40**

(21) Application number: **25167221.8**

(22) Date of filing: **28.03.2025**

(51) International Patent Classification (IPC):
***H01M 10/0587*** *(2010.01)* ***H01M 10/0525*** *(2010.01)*
***H01M 10/0568*** *(2010.01)* ***H01M 10/0569*** *(2010.01)*
***H01M 10/04*** *(2006.01)* ***H01M 4/134*** *(2010.01)*
***H01M 4/38*** *(2006.01)*

(52) Cooperative Patent Classification (CPC):
**H01M 10/0587; H01M 4/134; H01M 4/386; H01M 10/0431; H01M 10/0525; H01M 10/0568; H01M 10/0569**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **30.03.2024 CN 202410383403**

(71) Applicant: **NINGDE AMPEREX TECHNOLOGY LIMITED**
**Ningde City, Fujian Province 352100 (CN)**

(72) Inventors:
- **LIU, Junfei**
**Ningde City, Fujian Province, China, 352100 (CN)**
- **YANG, Shuang**
**Ningde City, Fujian Province, China, 352100 (CN)**
- **WANG, Ben**
**Ningde City, Fujian Province, China, 352100 (CN)**
- **LAN, Disheng**
**Ningde City, Fujian Province, China, 352100 (CN)**

(74) Representative: **Icosa**
**83 avenue Denfert-Rochereau**
**75014 Paris (FR)**

(54) **ELECTROCHEMICAL APPARATUS AND ELECTRONIC APPARATUS**

(57) An electrochemical apparatus and an electronic apparatus, including an electrode assembly (10). The electrode assembly (10) includes a positive electrode plate (12), a negative electrode plate (11), and a separator (13). The positive electrode plate (12) includes a positive electrode current collector (121), a first positive electrode active material layer (122), and a second positive electrode active material layer (123). The negative electrode plate (11) includes a negative electrode current collector (111), a first negative electrode active material layer (112), and a second negative electrode active material layer (113). The electrode assembly (10) includes a flat region (S) and a bent region (C). The negative electrode plate (11) includes a first bent section (11a) and a second bent section (11b). The positive electrode plate (12) includes a third bent section (12a). The first bent section (11a), the third bent section (12a), and the second bent section (11b) are sequentially disposed away from a winding center (O). The electrode assembly (10) satisfies a relation: $0.850 \le \frac{N_2/P_2}{N_1/P_1} \le 0.99$, where $N_1$ represents a capacity per unit area of the second negative electrode active material layer (113) in the first bent section (11a); $P_1$ represents a capacity per unit area of the first positive electrode active material layer (122) in the third bent section (12a); $N_2$ represents a capacity per unit area of the first negative electrode active material layer (112) in the second bent section (11b); and $P_2$ represents a capacity per unit area of the second positive electrode active material layer (123) in the third bent section (12a).

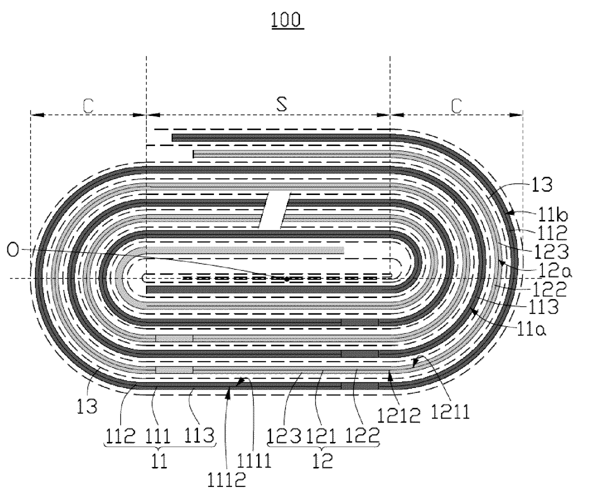


FIG. 1

EP 4 625 597 A1

## Description

### TECHNICAL FIELD

This application relates to the field of electrochemical energy storage, in particular, to an electrochemical apparatus and an electronic apparatus using such electrochemical apparatus.

### BACKGROUND

As portable chemical energy, electrochemical apparatuses (such as lithium-ion batteries) are widely used in fields of consumer electronics (such as mobile phones, laptops, and cameras), energy storage products (such as home energy storage, energy storage stations, and UPS power supplies), and new energy vehicles due to their advantages of high energy density, high working voltage plateau, low self-discharge, long service life, and environmental friendliness.

An electrochemical apparatus may include an electrode assembly of a wound structure, which has the advantages such as high customization degree and high production efficiency. However, the electrode assembly is prone to lithium precipitation at bent sections, reducing the service life and safety of the electrochemical apparatus.

### SUMMARY

This application provides an electrochemical apparatus that can alleviate the problem of lithium precipitation.

In addition, this application further provides an electronic apparatus including such electrochemical apparatus.

According to a first aspect, this application provides an electrochemical apparatus including an electrode assembly, where the electrode assembly is a wound structure. The electrode assembly includes a positive electrode plate, a negative electrode plate, and a separator located between the positive electrode plate and the negative electrode plate. The positive electrode plate includes a positive electrode current collector, a first positive electrode active material layer, and a second positive electrode active material layer. The positive electrode current collector includes a first surface facing a winding center and a second surface facing away from the first surface. The first positive electrode active material layer is disposed on the first surface. The second positive electrode active material layer is disposed on the second surface. The negative electrode plate includes a negative electrode current collector, a first negative electrode active material layer, and a second negative electrode active material layer. The negative electrode current collector includes a third surface facing the winding center and a fourth surface facing away from the third surface. The first negative electrode active material layer is disposed on the third surface. The second negative electrode active material layer is disposed on the fourth surface. The electrode assembly includes a flat region and a bent region connected to each other. In the bent region, the negative electrode plate includes a first bent section and a second bent section. The positive electrode plate includes a third bent section. The first bent section, the third bent section, and the second bent section are sequentially disposed in a direction away from the winding center. The electrode assembly satisfies the following relation:

$$0.850 \leq \frac{N_2/P_2}{N_1/P_1} \leq 0.99.$$

$N_1$ represents a capacity per unit area of the second negative electrode active material layer in the first bent section; $P_1$ represents a capacity per unit area of the first positive electrode active material layer in the third bent section; $N_2$ represents a capacity per unit area of the first negative electrode active material layer in the second bent section; and $P_2$ represents a capacity per unit area of the second positive electrode active material layer in the third bent section.

In this application, a ratio of a capacity per unit area of the negative electrode active material layer to a capacity per unit area of the positive electrode active material layer opposite the negative electrode active material layer in the bent region (that is, cell balance value, CB value) is adjusted to make sure that a CB value in the inner layer of the bent region is greater than a CB value in an outer layer of the bent region, thereby helping to increase the lithium intercalation space of the negative electrode active material layer on the inner layer of the bent region, reduce the risk of lithium precipitation, and alleviate the problem that lithium precipitation easily occurs due to large compression to the inner layer and large internal stress of the electrode plate in the bent region.

Based on the first aspect, in some possible embodiments, $1.04 \leq N_1/P_1 \leq 1.25$. This helps to further increase lithium intercalation space of the negative electrode active material layer on an inner layer of the bent region and alleviate the problem that lithium precipitation easily occurs in the negative electrode active material layer on the inner layer of the bent region due to a large internal stress.

Based on the first aspect, in some possible embodiments, a coating weight per unit area of each of the first negative electrode active material layer and the second negative electrode active material layer is 2.0 $mg/cm^2$ to 12 $mg/cm^2$. This helps to maintain the structural stability of the negative electrode plate, reduce the lithium precipitation

amount, prolong the cycle life of the electrochemical apparatus, and reduce safety risks caused by lithium precipitation during use of the electrochemical apparatus.

Based on the first aspect, in some possible embodiments, the electrochemical apparatus further includes an electrolyte, and the electrolyte includes a compound represented by formula I:

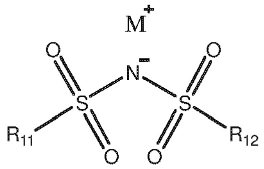 (formula I).

$M^+$ is selected from one of $Li^+$, $Na^+$, $K^+$, or $Cs^+$ cations; R11 and R12 are independently selected from -CN, a halogen atom, an alkyl group substituted by a halogen atom, an alkenyl group substituted by a halogen atom, or an alkynyl group substituted by a halogen atom, where the number of carbon atoms in the alkyl group is 1 to 4, and the numbers of carbon atoms in the alkenyl group and alkynyl group are 2 to 4.

The compound represented by formula I added to the electrolyte has good metal stability to lithium metal; the compound represented by formula I can form inorganic salts such as lithium nitride ($Li_3N$) and lithium sulfide ($Li_2S$) with active lithium; and if R11 and R12 in the compound represented by formula I have fluorine atoms, lithium fluoride (LiF) can also be formed. The inorganic salts such as $Li_3N$, $Li_2S$, and LiF have good lithium ion transport property and can enhance lithium ion transport effect, reduce polarization caused by lithium ion transport, and reduce impedance, thereby reducing occurrence of lithium precipitation, reducing polarization of the electrochemical apparatus, and also increasing a trough voltage during low-temperature high-rate discharge. Thus, the low-temperature performance of the electrochemical apparatus is improved.

Based on the first aspect, in some possible embodiments, the compound represented by formula I is selected from at least one of compounds represented by formula I-1 to formula I-7:

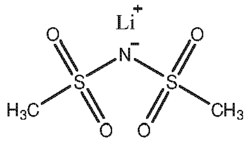 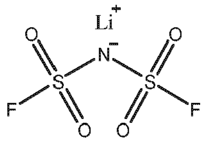 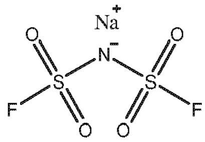 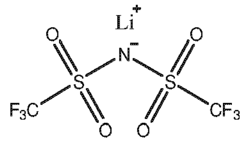

(formula I-1) (formula I-2) (formula I-3) (formula I-4)

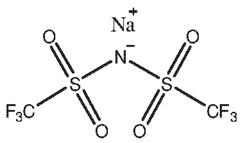 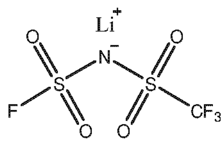 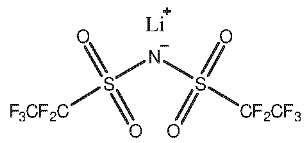

formula I-5 formula I-6 formula I-7.

The compound represented by formula I is reduced on an interface of the negative electrode plate to form $Li_3N$ and $Li_2S$ which have good lithium ion transport property, facilitates lithium ion transport, and also helps to improve the electrical conductivity, thereby further increasing the trough voltage of a battery during low-temperature discharge.

Based on the first aspect, in some possible embodiments, a mass percentage of the compound represented by formula I in the electrolyte is m, where 1%≤m≤20%. This helps to further reduce the possibility of occurrence of lithium precipitation and also helps to increase a trough voltage during low-temperature discharge.

Based on the first aspect, in some possible embodiments, $0.8\le\frac{100*m}{N_1/P_1}\le19.2$. This helps to provide more lithium intercalation space for lithium ions and reduce lithium precipitation, and also helps to increase the trough voltage during low-temperature discharge.

Based on the first aspect, in some possible embodiments, the electrolyte further includes an organic solvent; the organic solvent includes at least one of ethyl methyl carbonate, ethyl acetate, ethyl propionate, fluorinated ethyl methyl carbonate, fluorinated ethyl acetate, or a fluorinated ethyl propionate compound; and a mass percentage of the organic solvent in the electrolyte is 20% to 60%. The organic solvent can improve the infiltration performance of the electrolyte into the electrode plate, help to enhance the infiltration effect of the electrolyte in the bent region, and reduce ion migration

impedance, thereby facilitating lithium ion intercalation into the negative electrode plate and reducing the lithium precipitation amount.

Based on the first aspect, in some possible embodiments, the fluorinated ethyl methyl carbonate is selected from at least one of a compound represented by formula II-1 or a compound represented by formula II-2; the fluorinated ethyl acetate is selected from at least one of a compound represented by formula II-3 to a compound represented by formula II-5; and the fluorinated ethyl propionate is selected from at least one of a compound represented by formula II-6 or a compound represented by formula II-7:

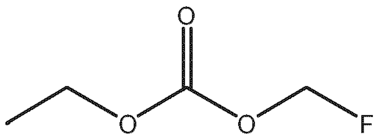

formula II-1

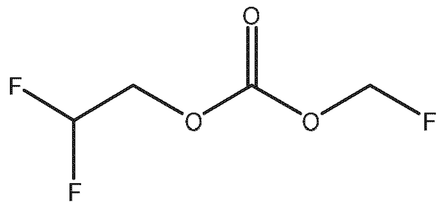

formula II-2

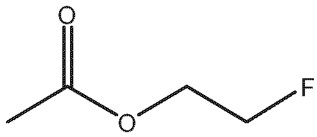

formula II-3

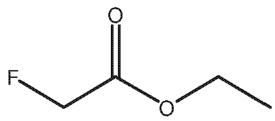

formula II-4

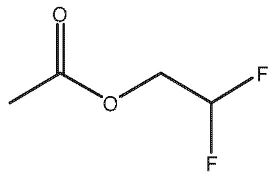

formula II-5

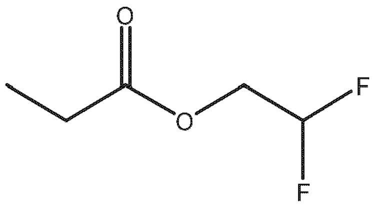

formula II-6

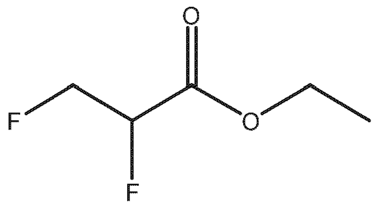

formula II-7.

The organic solvent can not only better reduce surface tension of the electrolyte to facilitate the infiltration of the electrolyte into the electrode assembly, but also have good oxygen resistance, thereby reducing side reactions of positive electrode oxidation.

Based on the first aspect, in some possible embodiments, the compound represented by formula I and the organic solvent satisfy the following relation:

$$0.01 \leq \frac{\sum_{i=1}^{n} \frac{m_i}{M_i}}{\sum_{j=1}^{k} \frac{m_j}{M_j}} \leq 0.5.$$

$m_i$ represents a mass of the i-th one of a plurality of compounds represented by formula I in the electrolyte; $M_i$ represents a relative molecular mass of the i-th compound represented by formula I; $m_j$ represents a mass of the j-th one of a plurality of organic solvents in the electrolyte; and $M_j$ represents a relative molecular mass of the j-th organic solvent. This helps to further increase the trough voltage of the electrochemical apparatus during low-temperature discharge.

Based on the first aspect, in some possible embodiments, the electrolyte further includes ethylene carbonate, and a mass percentage of the ethylene carbonate in the electrolyte is 5% to 30%. Adding ethylene carbonate (EC) to the electrolyte can enhance dissociation of lithium salts, facilitate transport of $Li^+$ in the electrolyte, facilitate formation of a solid electrolyte interface film (SEI film) on the negative electrode plate and the precipitated lithium metal, reduce side reactions, and inhibit the growth of lithium dendrites, thereby improving the stability and safety of the electrochemical apparatus.

According to a first aspect, in some possible embodiments, the first negative electrode active material layer and the second negative electrode active material layer each include a silicon-containing active substance; the silicon-containing active substance includes the silicon element; and a mass percentage of the silicon element is 1% to 15%

based on a total mass of each negative electrode active material layer. This helps to increase the capacity and energy density of the electrochemical apparatus.

According to a second aspect, this application provides an electronic apparatus including such electrochemical apparatus. The electronic apparatus is supplied with power by the electrochemical apparatus. In the electrochemical apparatus, the CB value in the inner layer of the bent region being greater than the CB value in the outer layer of the bent region helps to increase the lithium intercalation space of the negative electrode active material layer on the inner layer of the bent region, reduce the risk of lithium precipitation, and improve the cycle life and overall safety of the electrochemical apparatus, thereby improving the cycle life and safety of the electronic apparatus.

## BRIEF DESCRIPTION OF DRAWINGS

The above and/or additional aspects and advantages of this application will become obvious and easy to understand from the description of some embodiments with reference to the following accompanying drawings.

FIG. 1 is a schematic structural diagram of an electrode assembly according to an embodiment of this application.
FIG. 2 is a discharge curve diagram of a battery prepared in Example 1-5.

Main reference signs:

| | |
|---|---|
| Electrochemical apparatus | 100 |
| Electrode assembly | 10. |
| Negative electrode plate | 11 |
| Negative electrode current collector | 111 |
| Third surface | 1111 |
| Fourth surface | 1112 |
| First negative electrode active material layer | 112 |
| Second negative electrode active material layer | 113 |
| Positive electrode plate | 12 |
| Positive electrode current collector | 121 |
| First surface | 1211 |
| Second surface | 1212 |
| First positive electrode active material layer | 122 |
| Second positive electrode active material layer | 123 |
| Separator | 13 |
| First bent section | 11a |
| Second bent section | 11b |
| Third bent section | 12a |
| Flat region | S |
| Bent region | C |
| Winding center | O |

## DETAILED DESCRIPTION

The following clearly and detailly describes the technical solutions in some embodiments of this application. Apparently, the described embodiments are some embodiments rather than all embodiments of this application. Unless otherwise defined, all technical and scientific terms used herein shall have the same meanings as commonly understood by persons skilled in the art to which this application belongs. The terms used in the specification of this application are merely intended to describe specific embodiments rather than to limit this application.

The term "about" used herein are intended to describe and represent small variations. When used in combination with an event or a circumstance, the term may refer to an example in which the exact event or circumstance occurs or an example in which an extremely similar event or circumstance occurs. For example, when used in combination with a value, the term may refer to a variation range of less than or equal to ±10% of the value, for example, less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%. In addition, quantities, ratios, and other

values are sometimes presented in the format of ranges in this specification. It should be understood that such format of ranges is used for convenience and simplicity and should be flexibly understood as including not only values explicitly designated as falling within the range but also all individual values or sub-ranges covered by the range as if each value and sub-range are explicitly designated.

In the specific embodiments and claims, the list of items connected by the terms "at least one of", "at least one type of", or other similar terms may mean any combination of the listed items. For example, if items A and B are listed, the phrase "at least one of A and B" or "at least one of A or B" means only A; only B; or A and B. In another example, if items A, B, and C are listed, the phrase "at least one of A, B, and C" or "at least one of A, B, or C" means only A; only B; only C; A and B (excluding C); A and C (excluding B); B and C (excluding A); or all of A, B, and C. The item A may include a single element or a plurality of elements. The item B may include a single element or a plurality of elements. The item C may include a single element or a plurality of elements.

In the specific embodiments and claims, as used herein, the term "alkyl group" refers to a straight-chain saturated hydrocarbon structure having 1 to 10 carbon atoms. The term "alkyl group" is also intended to be a branched or cyclic hydrocarbon structure having 3 to 10 carbon atoms. For example, the alkyl group may be an alkyl group having 1 to 4 carbon atoms. References to an alkyl group with a specific carbon number are intended to cover all geometric isomers with the specific carbon number. Therefore, for example, "butyl group" is meant to include n-butyl, sec-butyl, isobutyl, tert-butyl, and cyclobutyl; and "propyl group" includes n-propyl, isopropyl, and cyclopropyl. Examples of alkyl groups include, but are not limited to, methyl, ethyl, n-propyl, isopropyl, cyclopropyl, n-butyl, isobutyl, sec-butyl, tert-butyl, cyclobutyl, cyclopropyl, cyclobutyl, and norbornyl. In addition, the alkyl group may be arbitrarily substituted.

The term "alkenyl group" refers to a straight-chain or branched monovalent unsaturated hydrocarbon group having at least one and usually 1, 2, or 3 carbon-carbon double bonds. Unless otherwise defined, the alkenyl group usually has 2-10 carbon atoms, for example, it may be an alkenyl group having 2 to 4 carbon atoms. Representative alkenyl groups include (for example) vinyl, n-propenyl, isopropenyl, n-but-2-alkenyl, and but-3-alkenyl. In addition, the alkenyl group may be arbitrarily substituted.

The term "alkynyl group" refers to a straight-chain or branched monovalent unsaturated hydrocarbon group having at least one and usually 1, 2, or 3 carbon-carbon triple bonds. The alkynyl group usually has 2 to 4 carbon atoms. Representative alkynyl groups include (for example) ethynyl, prop-2-ynyl (n-propynyl), and n-but-2-ynyl. In addition, the alkynyl group may be arbitrarily substituted.

When the above substituted groups are substituted, unless otherwise specified, they are substituted by one or more halogens.

As used herein, the term "halogen" covers F, Cl, Br, and I, preferably F or Cl.

The term "positive electrode active material" refers to a material capable of reversibly intercalating and deintercalating lithium ions. In some embodiments of this application, the positive electrode active material includes, but is not limited to, lithium-containing transition metal oxides.

Referring to FIG. 1, an embodiment of this application provides an electrochemical apparatus 100. The electrochemical apparatus 100 includes any apparatus in which electrochemical reactions take place, and specific examples thereof include all types of primary batteries, secondary batteries, fuel cells, solar cells, or capacitors. Especially, the electrochemical apparatus 100 is a lithium secondary battery, including a lithium metal secondary battery, a lithium-ion secondary battery, a lithium polymer secondary battery, or a lithium-ion polymer secondary battery.

The electrochemical apparatus 100 includes a housing (not shown in the figure), an electrode assembly 10, and an electrolyte (not shown in the figure). The electrode assembly 10 and the electrolyte are both located inside the housing.

The housing may be a packaging bag formed by a packaging film (such as an aluminum-plastic film) through packaging. For example, the electrochemical apparatus 100 is a pouch battery. In some other embodiments, the electrochemical apparatus 100 may alternatively be a steel-shell battery, an aluminum-shell battery, or the like.

The electrode assembly 10 is a wound structure. The electrode assembly 10 includes a negative electrode plate 11, a positive electrode plate 12, and a separator 13 located between the negative electrode plate 11 and the positive electrode plate 12. The positive electrode plate 12 includes a positive electrode current collector 121, a first positive electrode active material layer 122, and a second positive electrode active material layer 123. The positive electrode current collector 121 includes a first surface 1211 facing a winding center O and a second surface 1212 facing away from the first surface 1211. The first positive electrode active material layer 122 is disposed on the first surface 1211, and the second positive electrode active material layer 123 is disposed on the second surface 1212. The negative electrode plate 11 includes a negative electrode current collector 111, a first negative electrode active material layer 112, and a second negative electrode active material layer 113. The negative electrode current collector 111 includes a third surface 1111 facing the winding center O and a fourth surface 1112 facing away from the third surface 1111. The first negative electrode active material layer 112 is disposed on the third surface 1111, and the second negative electrode active material layer 113 is disposed on the fourth surface 1112.

The electrode assembly 10 includes a flat region S and a bent region C connected to each other. In the bent region C, the negative electrode plate 11 has a first bent section 11a and a second bent section 11b; the positive electrode plate 12

has a third bent section 12a; and the first bent section 11a, the third bent section 12a, and the second bent section 11b are sequentially disposed in a direction away from the winding center O.

Referring to FIG. 1, the bent region C is a bent part of the electrode assembly 10, and the bent region C is a concept relative to the flat region S in the electrode assembly 10. In a winding direction, the positive electrode plate 12, the negative electrode plate 11, and the separator 13 are stacked and wound to form the flat region S and a plurality of bent regions C. For example, the contour of the electrode assembly 10 is polygonal, and the electrode assembly 10 has a plurality of bent regions C. In this embodiment, two bent regions C are illustrated as examples. Two ends of the first bent section 11a, the third bent section 12a, and the second bent section 11b are both connected to an electrode plate in the flat region S. The first bent section 11a, the third bent section 12a, and the second bent section 11b are stacked in an arc shape.

The electrode assembly 10 satisfies the following relation:

$$0.850 \leq \frac{N_2/P_2}{N_1/P_1} \leq 0.99.$$

$N_1$ represents a capacity per unit area of the second negative electrode active material layer 113 in the first bent section 11a; $P_1$ represents a capacity per unit area of the first positive electrode active material layer 122 in the third bent section 12a; $N_2$ represents a capacity per unit area of the first negative electrode active material layer 112 in the second bent section 11b; and $P_2$ represents a capacity per unit area of the second positive electrode active material layer 123 in the third bent section 12a. $N_1$ can be construed as a capacity per unit area of an outer convex surface of the second negative electrode active material layer 113 at the first bent section 11a; $P_1$ represents a capacity per unit area of an inner concave surface of the first positive electrode active material layer 122 at the third bent section 12a; $N_2$ represents a capacity per unit area of an inner concave surface of the first negative electrode active material layer 112 at the second bent section 11b; and $P_2$ represents a capacity per unit area of an outer convex surface of the second positive electrode active material layer 123 at the third bent section 12a.

In the related art, as compared with the winding center, in the bent region, an electrode plate at an outer layer of the bent portion has a larger surface area than an electrode plate at an inner layer. When the outer layer is the positive electrode plate and the inner layer is the negative electrode plate, at the same capacity per unit area, lithium ions deintercalated from the positive electrode plate cannot be completely intercalated into the negative electrode plate due to insufficient lithium intercalation space, leading to lithium precipitation. Moreover, in the bent region, the active material layer on a side of the positive electrode plate or the negative electrode plate facing the winding center is compressed and aggregate together, which increases internal stress of the electrode plat and is not conducive to deintercalation of active ions during charging and discharging, so that the active material layer on a side of the positive electrode plate or the negative electrode plate facing away from the winding center becomes loose. As a result, when the positive electrode plate or the negative electrode plate is closer to the winding center, difference of stress applied to the electrode plate is more significant, and lithium precipitation is more severe.

In this application, the capacity per unit area of the positive electrode plate 12 at the outer layer is reduced, or the capacity per unit area of the negative electrode plate 11 at the inner layer is correspondingly increased to adjust a ratio N/P (that is, cell balance value, CB value) of the capacity per unit area of the single-sided active material layer of the positive electrode plate 12 to the capacity per unit area of the single-sided active material layer of the negative electrode plate 11 opposite the positive electrode plate 12 in the bent region C, so that N/P is within an appropriate range, alleviating the problem of insufficient lithium intercalation space caused by the larger surface area of the positive electrode plate 12 at the outer layer compared to the negative electrode plate 11 at the inner layer and providing sufficient lithium intercalation space. In this way, lithium deintercalated from the positive electrode active material layer on the positive electrode plate 12 can be intercalated into the negative electrode active material layer on the negative electrode plate 11, reducing the occurrence of lithium precipitation.

In addition, the CB value of the ratio of the capacity per unit area of the negative electrode active material layer to the capacity per unit area of the positive electrode active material layer opposite the negative electrode active material layer in the bent region C is adjusted, so that the CB value of the inner layer of the bent region C is greater than the CB value of the outer layer of the bent region C. For example, a value of $N_2/P_2$ is greater than a value of $N_1/P_1$, further increasing the lithium intercalation space of the negative electrode active material layer on the inner layer of the bent region C and reducing the risk of lithium precipitation, thereby reducing the influence of stress difference on the active material layer on the electrode plate in the bent region C on lithium precipitation. Thus, the problem that lithium precipitation easily occurs due to high compression to the inner layer and high internal stress of the electrode plate in the bent region C is alleviated.

If the value of the above relation is small, to be specific, the CB value (such as $N_1/P_1$) of the inner layer of the bent region C is larger, the CB value (such as $N_2/P_2$) of the outer layer of the bent region C is smaller, and the two values have a large difference, the difference in lithium intercalation degree of the first negative electrode active material layer 112 and the second negative electrode active material layer 113 on the negative electrode plate 11 in the bent region C is large, leading to different swelling thicknesses of different bent sections of the negative electrode plate 11, thereby causing

uneven stress on the negative electrode plate 11 and the positive electrode plate 12 opposite the negative electrode plate 11 in the bent region C. This increases the lithium precipitation amount. If the value of the above relation is large, the risk of lithium precipitation increases, and precipitated lithium dendrites may pierce the separator 13, causing an internal short circuit in the electrochemical apparatus 100, increasing the temperature of the electrochemical apparatus 100, and causing safety issues. In some embodiments, $\frac{N_2/P_2}{N_1/P_1}$ may be 0.85, 0.86, 0.87, 0.88, 0.89, 0.90, 0.91, 0.92, 0.93, 0.94, 0.95, 0.96, 0.97, 0.98, 0.99, or any value within a range defined by any two of these values. Preferably, $0.9 \leq \frac{N_2/P_2}{N_1/P_1} \leq 0.99$.

In some embodiments, $1.04 \leq N_1/P_1 \leq 1.25$. The value of a capacity per unit area ratio N/P of the active material layers on the first bent section 11a and the third bent section 12a is within the above range. This helps to further increase the lithium intercalation space of the negative electrode active material layer on the inner layer of the bent region C, thereby improving the problem of lithium precipitation in the negative electrode active material layer caused by large internal stress in the inner layer of the bent region. In some embodiments, $N_1/P_1$ may be 1.04, 1.06, 1.08, 1.10, 1.12, 1.14, 1.16, 1.18, 1.20, 1.22, 1.24, 1.25, or any value within a range defined by any two of these values.

In some embodiments, a coating weight per unit area of each of the first negative electrode active material layer and the second negative electrode active material layer is 2.0 $mg/cm^2$ to 12 $mg/cm^2$. This helps to maintain the structural stability of the negative electrode plate, reduce the lithium precipitation amount, prolong the cycle life of the electrochemical apparatus 100, and reduce the safety risks caused by lithium precipitation during use of the electrochemical apparatus 100. A large coating weight per unit area of the active material layer on the negative electrode current collector may increase the internal resistance of the negative electrode plate, resulting in energy loss during charging and discharging; whereas a small coating weight per unit area of the active material layer on the negative electrode current collector may lead to increased polarization and increased lithium precipitation amount, affecting the electrical performance of the electrochemical apparatus 100. In some embodiments, the coating weight per unit area of each of the first negative electrode active material layer and the second negative electrode active material layer is 2.0 $mg/cm^2$, 3.0 $mg/cm^2$, 4.0 $mg/cm^2$, 5.0 $mg/cm^2$, 6.0 $mg/cm^2$, 7.0 $mg/cm^2$, 8.0 $mg/cm^2$, 9.0 $mg/cm^2$, 10.0 $mg/cm^2$, *11.0* $mg/cm^2$, 12.0 $mg/cm^2$, or any value within a range defined by any two of these values. Preferably, the coating weight per unit area of each of the first negative electrode active material layer 112 and the second negative electrode active material layer 113 is 4.0 $mg/cm^2$ to 10 $mg/cm^2$.

Electrolyte

According to some embodiments of this application, the electrolyte includes an organic solvent, ethylene carbonate, a lithium salt, and a compound represented by formula I.

In some embodiments, the lithium salt is selected from one or more of an inorganic lithium salt and an organic lithium salt. In some embodiments, the lithium salt includes at least one of the fluorine element, the boron element, or the phosphorus element. In some embodiments, the lithium salt is selected from one or more of the following lithium salts: lithium hexafluorophosphate $LiPF_6$, lithium hexafluoroarsenate $LiAsF_6$, lithium perchlorate $LiClO_4$, or lithium trifluoromethanesulfonate $LiCF_3SO_3$.

In some embodiments, a concentration of the lithium salt is 0.3 mol/L to 1.5 mol/L. In some embodiments, the concentration of the lithium salt is 0.5 mol/L to 1.3 mol/L or about 0.8 mol/L to 1.2 mol/L. In some embodiments, the concentration of the lithium salt is about 1.10 mol/L.

In some embodiments, a structural formula of the compound represented by formula I is as follows:

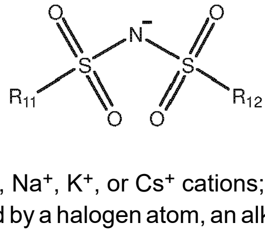 (formula I).

$M^+$ is selected from one of $Li^+$, $Na^+$, $K^+$, or $Cs^+$ cations; R11 and R12 are independently selected from -CN, a halogen atom, an alkyl group substituted by a halogen atom, an alkenyl group substituted by a halogen atom, or an alkynyl group substituted by a halogen atom, where the number of carbon atoms in the alkyl group is 1 to 4, and the numbers of carbon atoms in the alkenyl group and alkynyl group are 2 to 4.

The halogen atom may be selected from one of fluorine, chlorine, bromine, or iodine. The compound represented

by formula I added to the electrolyte has good metal stability to lithium metal; the compound represented by formula I can form inorganic salts such as lithium nitride ($Li_3N$) and lithium sulfide ($Li_2S$) with active lithium; and if R11 and R12 in the compound represented by formula I have fluorine atoms, lithium fluoride (LiF) can also be formed. The inorganic salts such as $Li_3N$, $Li_2S$, and LiF have good lithium ion transport property and can enhance lithium ion transport effect, reduce polarization caused by lithium ion transport, and reduce impedance, thereby reducing occurrence of lithium precipitation, reducing polarization of the electrochemical apparatus, and also increasing a trough voltage during low-temperature high-rate discharge. Thus, the low-temperature performance of the electrochemical apparatus is improved. In addition, the compound represented by formula I includes a large anionic group, which dissociates more completely in a solvent of the electrolyte, helping to enhance the lithium ion transport capability in the electrolyte, improve the electrical conductivity, and reduce ion migration impedance, thereby further increasing the trough voltage during low-temperature discharge.

Preferably, the halogen atom is a fluorine atom.

In some embodiments, the compound represented by formula I is selected from at least one of the following compounds represented by formula I-1 to formula I-7:

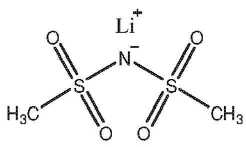
(formula I-1)

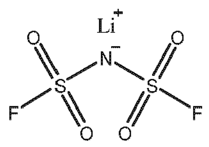
(formula I-2)

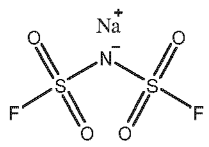
(formula I-3)

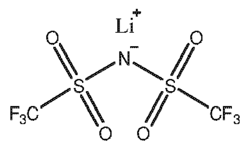
(formula I-4)

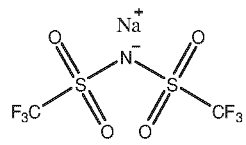
formula I-5

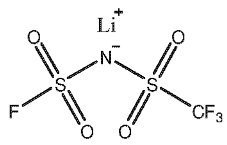
formula I-6

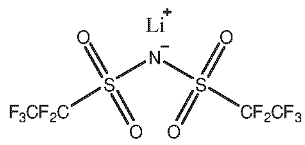
formula I-7.

The compound represented by formula I is reduced on an interface of the negative electrode plate to form $Li_3N$ and $Li_2S$ which have good lithium ion transport property, facilitates lithium ion transport, and also helps to improve the electrical conductivity, thereby further increasing the trough voltage during low-temperature discharge of the electrochemical apparatus 100.

In some embodiments, a mass percentage of the compound represented by formula I in the electrolyte is m, and $1\% \leq m \leq 20\%$. This helps to further reduce the possibility of occurrence of lithium precipitation and also helps to increase the trough voltage during low-temperature discharge. A large mass percentage of the compound represented by formula I in the electrolyte may reduce the ionic conductivity of the electrolyte, and an excessively large content thereof also poses a risk of corrosion and damage to the current collector. In some embodiments, m may be 1%, 2%, 3%, 4%, 5%, 6%, 7%, 8%, 9%, 10%, 11%, 12%, 13%, 14%, 15%, 16%, 17%, 18%, 19%, 20%, or any value within a range defined by any two of these values. Preferably, $3\% \leq m \leq 15\%$.

In some embodiments, $0.8 \leq \frac{100*m}{N_1/P_1} \leq 19.2$. In the electrolyte, N/P in the compound represented by formula I and the electrode plate satisfies the above relation. This can provide more lithium intercalation space for lithium ions, reduce lithium precipitation, and also help to further increase the trough voltage during low-temperature discharge. In some embodiments, $\frac{100*m}{N_1/P_1}$ may be 0.8, 1, 1.5, 2, 4, 5, 6, 8, 10, 12, 14, 16, 18, 19.2, or any value within a range defined by any two of these values. Preferably, $4 \leq \frac{100*m}{N_1/P_1} \leq 14$.

In some embodiments, the electrolyte further includes an organic solvent; the organic solvent includes at least one of ethyl methyl carbonate (EMC), ethyl acetate (EA), ethyl propionate (EP), fluorinated ethyl methyl carbonate, fluorinated ethyl acetate, or a fluorinated ethyl propionate compound; and a mass percentage of the organic solvent in the electrolyte is s, where $20\% \leq s \leq 60\%$. Space compression is caused between electrode plates in the bent region C due to the presence of tension, and the addition of the organic solvent can improve the infiltration performance of the electrolyte into the electrode plate, helping to enhance the infiltration effect of the electrolyte into the electrode plate in the bent region, and reducing ion migration impedance, thereby facilitating $Li^+$ intercalation into the negative electrode plate, and reducing the

lithium precipitation amount. The mass percentage of the organic solvent in the electrolyte being within the above range helps to further enhance the infiltration effect of the electrolyte in the bent region, helps to reduce the ion migration impedance, and increases the trough voltage of the electrochemical apparatus during low-temperature discharge. A large mass percentage of the organic solvent results in limited dissociation capability of the organic solvent for the lithium salt, which weakens the dissociation of the lithium salt and is not conducive to increasing the trough voltage of the electrochemical apparatus during low-temperature discharge. A small mass percentage of the organic solvent results in an insignificant effect in improving the dissociation of the lithium salt. In some embodiments, s may be 20%, 25%, 30%, 35%, 40%, 45%, 50%, 55%, 60%, or any value within a range defined by any two of these values.

In some embodiments, the fluorinated ethyl methyl carbonate is selected from at least one of a compound represented by formula II-1 or a compound represented by formula II-2; the fluorinated ethyl acetate is selected from at least one of compounds represented by formula II-3 to formula II-5; and the fluorinated ethyl propionate is selected from at least one of a compound represented by formula II-6 or a compound represented by formula II-7:

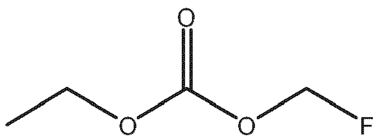

formula II-1

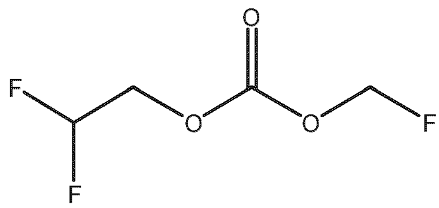

formula II-2

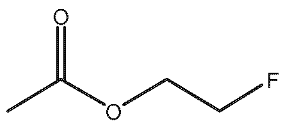

formula II-3

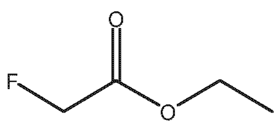

formula II-4

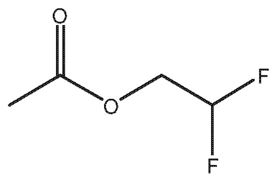

formula II-5

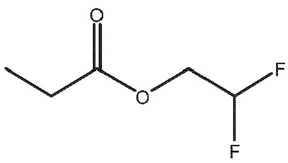

formula II-6

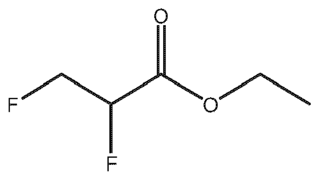

formula II-7.

The addition of the foregoing organic solvents to the electrolyte can not only better reduce the surface tension of the electrolyte, facilitating the infiltration of the electrolyte into the electrode assembly, but also has good oxygen resistance, which can reduce side reactions of positive electrode oxidation.

In some embodiments, the compound represented by formula I and the organic solvent satisfy the following relation:

$$0.01 \leq \frac{\sum_{i=1}^{n} \frac{m_i}{M_i}}{\sum_{j=1}^{k} \frac{m_j}{M_j}} \leq 0.5.$$

$m_i$ represents a mass of the i-th one of a plurality of compounds represented by formula I in the electrolyte; $M_i$ represents a relative molecular mass of the i-th compound represented by formula I; $m_j$ represents a mass of the j-th one of a plurality of organic solvents in the electrolyte; and $M_j$ represents a relative molecular mass of the j-th organic solvent. The compound represented by formula I and the organic solvent satisfying the above relation can further increase the trough voltage of the electrochemical apparatus during low-temperature discharge.

In some embodiments, a mass percentage of the ethylene carbonate in the electrolyte is 5% to 30%. Adding the ethylene carbonate (EC) to the electrolyte can enhance the dissociation of the lithium salt, facilitate transport of $Li^+$ in the

electrolyte, help to form a solid electrolyte interface film (SEI film) on the negative electrode plate and the precipitated lithium metal, reduce side reactions, and inhibit the growth of lithium dendrites, thereby improving the stability and safety of the electrochemical apparatus 100. The mass percentage of the ethylene carbonate in the electrolyte may be 5%, 8%, 10%, 13%, 15%, 17%, 20%, 23%, 25%, 27%, 30%, or any value within a range defined by any two of these values.

The electrolyte used in the electrochemical apparatus 100 of this application is any electrolyte described above in this application. In addition, the electrolyte used in the electrochemical apparatus 100 of this application may alternatively include other electrolytes within the scope not departing from the essence of this application.

Positive electrode plate

The positive electrode active material includes at least one lithium intercalation compound capable of reversibly intercalating and deintercalating lithium ions. In some embodiments of this application, the positive electrode active material includes a lithium-containing transition metal oxide. In some embodiments, the positive electrode active material includes a composite oxide. In some embodiments, the composite oxide contains lithium and at least one element selected from cobalt, manganese, and nickel.

In some embodiments, the positive electrode active material may have a coating on its surface, or may be mixed with another compound having a coating. The coating may include at least one coating element compound selected from a coating element oxide, a coating element hydroxide, a coating element oxyhydroxide, a coating element oxycarbonate, and a coating element hydroxy carbonate. The compound used for the coating may be amorphous or crystalline.

In some embodiments, the coating element contained in the coating may include Mg, Al, Co, K, Na, Ca, Si, Ti, V, Sn, Ge, Ga, B, As, Zr, or any combination thereof. The coating can be applied by using any method as long as the method does not adversely affect performance of the positive electrode active material. For example, the method may include any coating method well known in the art, for example, spraying and soaking.

The positive electrode active material layer further includes a binder, and optionally includes a conductive material. The binder enhances bonding between particles of the positive electrode active material and also enhances bonding between the positive electrode active material and the current collector.

In some embodiments, the binder includes but is not limited to polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, and nylon.

In some embodiments, the conductive material includes but is not limited to a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, and silver. In some embodiments, the conductive polymer is a polyphenylene derivative.

In some embodiments, the current collector may be, but is not limited to, aluminum.

The positive electrode can be prepared using a preparation method well known in the art. For example, the positive electrode may be obtained using the following method: mixing an active material, a conductive material, and a binder in a solvent to prepare an active material composition, and applying the active material composition onto the current collector. In some embodiments, the solvent may include, but is not limited to, N-methylpyrrolidone.

In some embodiments, the positive electrode is made by forming, on the current collector, a positive electrode material using a positive electrode active material layer including lithium transition metal-based compound powder and a binder.

In some embodiments, the positive electrode active material layer may usually be made by the following operations: dry-mixing a positive electrode material and a binder (a conductive material, a thickener, and the like used as required) to form a sheet, pressing the obtained sheet onto the positive electrode current collector, or dissolving or dispersing these materials in a liquid medium to form a slurry, applying the slurry onto the positive electrode current collector, and then performing drying.

Negative electrode plate

The negative electrode current collector includes a copper foil, an aluminum foil, a nickel foil, a stainless steel foil, a titanium foil, foamed nickel, foamed copper, a polymer substrate coated with a conductive metal, or any combination thereof.

The negative electrode active material includes a material for reversibly intercalating/deintercalating lithium ions. In some embodiments, the material for reversibly intercalating/deintercalating lithium ions includes a carbon material. In some embodiments, the carbon material may be any carbon-based negative electrode active material commonly used in rechargeable lithium-ion electrochemical apparatuses 100. In some embodiments, the carbon material includes, but is not

limited to, crystalline carbon, amorphous carbon, or a mixture thereof. The crystalline carbon may be amorphous, plate-shaped, flake-shaped, spherical, or fiber-shaped natural graphite or artificial graphite. The amorphous carbon may be soft carbon, hard carbon, mesophase asphalt carbide, calcined coke, or the like.

In some embodiments, the negative electrode active material layer includes a negative electrode active material. The negative electrode active material is not limited to any specific type, and may be selected as required. In some embodiments, the negative electrode active material includes, but is not limited to, lithium metal, structured lithium metal, natural graphite, artificial graphite, mesocarbon microbeads (MCMB), hard carbon, soft carbon, silicon, a silicon-carbon composite, Li-Sn alloy, Li-Sn-O alloy, Sn, SnO, $SnO_2$, spinel-structure lithiated $TiO_2$-$Li_4Ti_5O_{12}$, Li-Al alloy, or any combination thereof.

In some embodiments, the negative electrode active materials in the first active negative electrode material layer and the second active negative electrode material layer on the negative electrode plate both include a silicon-containing active substance; the silicon-containing active substance contains the silicon element; and a mass percentage of the silicon element is 1% to 15% based on a total mass of each active material layer on the negative electrode plate, helping to increase the capacity and energy density of the electrochemical apparatus 100. In some embodiments, the mass percentage of the silicon element may be 1%, 2%, 3%, 4%, 5%, 6%, 7%, 8%, 9%, 10%, 11%, 12%, 13%, 14%, 15%, or any value within a range defined by any two of these values.

When the silicon-containing active substance includes a silicon-carbon compound, based on a total weight of the negative electrode active material, silicon:carbon=about 1:10 to 10:1, and a median particle size $D_v50$ of the silicon-carbon compound is about 0.1 microns to 20 microns. When the negative electrode includes an alloy material, the negative electrode active material layer may be formed using methods such as vapor deposition, sputtering, and plating. When the negative electrode includes lithium metal, for example, the negative electrode active material layer is formed by a spherical twisted conductive skeleton and metal particles dispersed in the conductive skeleton. In some embodiments, the spherical twisted conductive skeleton may have a porosity of about 5% to about 85%. In some embodiments, a protective layer may further be provided on the lithium metal negative electrode active material layer.

In some embodiments, the negative electrode active material layer may include a binder and optionally includes a conductive material. The binder enhances bonding between particles of the negative electrode active material and bonding between the negative electrode active material and the current collector. In some embodiments, the binder includes, but is not limited to, polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, and nylon.

In some embodiments, the conductive material includes, but is not limited to, a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, and silver. In some embodiments, the conductive polymer is a polyphenylene derivative.

In some embodiments, the current collector includes, but is not limited to, a copper foil, a nickel foil, a stainless steel foil, a titanium foil, foamed nickel, foamed copper, a polymer substrate coated with a conductive metal, and any combination thereof.

The negative electrode may be prepared using a preparation method well known in the art. For example, the negative electrode may be obtained using the following method: mixing an active material, a conductive material, and a binder in a solvent to prepare an active material composition, and applying the active material composition onto the current collector. In some embodiments, the solvent may include, but is not limited to, water.

Separator

In some embodiments, the electrochemical apparatus 100 of this application is provided with a separator between the positive electrode and the negative electrode to reduce the risk of short circuits. The separator used in the electrochemical apparatus 100 of this application is not particularly limited to any material or shape, and may be based on any technology disclosed in the prior art. In some embodiments, the separator includes a polymer, an inorganic substance, or the like formed by a material stable to the electrolyte of this application.

For example, the separator may include a matrix layer and a surface treatment layer. The matrix layer is a non-woven fabric, film, or composite film having a porous structure, and the matrix layer is made of a material selected from at least one of polyethylene, polypropylene, polyethylene terephthalate, or polyimide. Specifically, a polypropylene porous film, a polyethylene porous film, a polypropylene non-woven fabric, a polyethylene non-woven fabric, or a polypropylene-polyethylene-polypropylene porous composite film may be used. There may be one or a plurality of matrix layers. When there are a plurality of matrix layers, the composition of polymers of different matrix layers may be the same or different, and the weight-average molecular weights of the polymers of different matrix layers are not exactly the same. When there are a

plurality of matrix layers, pore closing temperatures of the polymers of different matrix layers are different.

In some embodiments, at least one surface of the matrix layer is provided with a surface treatment layer, and the surface treatment layer may be a polymer layer, an inorganic substance layer, or a layer formed by mixing a polymer and an inorganic substance.

In some embodiments, the separator includes a porous matrix and a coating layer, and the coating layer includes inorganic particles, organic particles, and a binder.

In some embodiments, a thickness of the coating layer is about 0.5 microns to about 10 microns, about 1 micron to about 8 microns, or about 3 microns to about 5 microns.

In some embodiments, the inorganic particles are selected from at least one of $SiO_2$, $Al_2O_3$, CaO, $TiO_2$, $ZnO_2$, MgO, $ZrO_2$, $SnO_2$, $Al(OH)_3$, or AlOOH. In some embodiments, the particle size of the inorganic particles is about 0.001 microns to about 3 microns.

In some embodiments, the binder is selected from at least one of polyvinylidene fluoride (PVDF), a polyvinylidene fluoride-hexafluoropropylene copolymer (PVDF-HFP), polyvinylpyrrolidone (PVP), polyacrylate, a pure acrylic emulsion (anionic acrylic emulsion formed by copolymerizing acrylate and special functional monomers), a styrene-acrylic emulsion ((styrene-acrylate emulsion) is formed through emulsion copolymerization of styrene and acrylate monomers), or a styrene-butadiene emulsion (SBR, formed through emulsion copolymerization of butadiene and styrene).

According to some embodiments of this application, the electrochemical apparatus 100 of this application includes, but is not limited to, a lithium-ion electrochemical apparatus or a sodium-ion electrochemical apparatus. In some embodiments, the electrochemical apparatus 100 includes a lithium-ion electrochemical apparatus 100.

In this application, the electrochemical apparatus 100 is also used in an electronic apparatus to provide power to a load in the electronic apparatus. According to the electrochemical apparatus 100 in the electronic apparatus, the capacity per unit area of the single-sided coating layer of each of the positive electrode plate and the negative electrode plate in the bent region of the electrode assembly is adjusted, and the CB value of the inner layer of the bent region is greater than the CB value of the outer layer of the bent region, helping to increase the lithium intercalation space of the negative electrode active material layer on the inner layer of the bent region, reducing lithium precipitation in the negative electrode active material layer, and improving the cycle life and overall safety of the electrochemical apparatus 100, thereby improving the cycle life and safety of the electronic apparatus.

The electronic device or apparatus of this application is not particularly limited. In some embodiments, the electronic device of this application includes, but is not limited to, a notebook computer, a pen-input computer, a mobile computer, an e-book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household energy storage electrochemical apparatus 100, and a lithium-ion capacitor.

The following describes this application by using specific examples and comparative examples. Persons skilled in the art should understand that the preparation method described in this application is merely an example, and any other suitable preparation methods fall within the scope of this application.

Comparative example 1

Preparation of negative electrode plate: A negative electrode active material artificial graphite, a thickener sodium carboxymethyl cellulose (CMC), and a binder styrene-butadiene rubber (SBR) were mixed at a weight ratio of 97.4:1:1.6, added with deionized water, and stirred by a vacuum stirrer to obtain a negative electrode slurry, where a solid content of the negative electrode slurry was 54wt%. The negative electrode slurry was uniformly applied onto both sides of a negative electrode current collector copper foil; and the coated copper foil was dried at 85°C, then subjected to cold pressing, die cutting and slitting, and dried under vacuum at 120°C for 12 hours to obtain a negative electrode plate, where capacity per unit area of a first negative electrode active material layer and capacity per unit area of a second negative electrode active material layer on the negative electrode plate were both 2.49 mAh/g.

A method for testing a capacity per unit area N of the negative electrode plate included: the negative electrode plate was cut into a disc with a diameter of 14 mm; the disc, together with a lithium sheet, a separator and an electrolyte, was assembled into a button battery; the assembled battery was left standing at room temperature for 24 h, then discharged to 0.005 V at 0.1C, and charged to 2.0 V at 0.1C; a capacity at that moment was recorded as $C_N$, where $N=C_N/(\pi*0.7*0.7)$; and then, a capacity per unit area of a single-sided coating layer of the negative electrode plate was obtained.

Preparation of positive electrode plate: A positive electrode active material $LiNi_{0.8}Co_{0.1}Mn_{0.1}O_2$, a conductive agent Super P, and a binder polyvinylidene fluoride were mixed at a weight ratio of 97.5:1.2:1.3, added with N-methylpyrrolidone (NMP), and stirred to uniformity by a vacuum stirrer to obtain a positive electrode slurry, where a solid content of the positive electrode slurry was 72wt%. The positive electrode slurry was uniformly applied onto both sides of a positive electrode current collector aluminum foil; and the coated aluminum foil was dried at 85°C, then subjected

to cold pressing, die cutting, and slitting, and dried under vacuum at 85°C for 4 hours to obtain a positive electrode, where capacity per unit area of a first positive electrode active material layer and capacity per unit area of a second positive electrode active material layer on the positive electrode plate were both 2.30 mAh/g.

A method for testing a capacity per unit area P of the positive electrode plate included: the positive electrode plate was cut into a disc with a diameter of 14 mm; the disc, together with a lithium sheet, a separator and an electrolyte, was assembled into a button battery; the assembled battery was left standing at room temperature for 24 h, then charged to 4.40 V at 0.1C, and discharged to 2.8 V at 0.1C; a capacity at that moment was recorded as $C_P$, where $N=C_P/(\pi*0.7*0.7)$; and then, a capacity per unit area of a single-sided coating layer of the positive electrode plate was obtained.

Preparation of electrolyte

In a dry argon atmosphere glove box, substances including 12.5% by mass of 1 mol/L $LiPF_6$, 20% by mass of ethylene carbonate (EC), and 67.5% by mass of diethyl carbonate (DEC) were weighed and then mixed to uniformity to obtain an electrolyte.

Preparation of separator

A 9 μm thick polyethylene (PE) separator was selected, coated with a polyvinylidene fluoride (PVDF) slurry and an $Al_2O_3$ slurry, and then dried to obtain a final separator.

Assembly of lithium-ion battery

The positive electrode, separator, and negative electrode were stacked in sequence, with the separator located between the positive and negative electrode plates; then the stack was wound, welded with tabs, and placed in an outer packaging aluminum foil-plastic film; and the foregoing electrolyte was injected, followed by vacuum sealing, standing, formation, shaping, and capacity testing, to obtain a pouch lithium-ion battery.

As compared with Comparative example 1, in Comparative example 2 and Comparative example 3, $N_1$, $N_2$, $P_1$, and $P_2$ were adjusted by changing a coating weight per unit area on the positive electrode plate and a coating weight per unit area on the negative electrode plate, and preparation parameters were recorded in Table 1.

As compared with Comparative example 1, in Example 1-1 to Example 1-8, $N_1$, $N_2$, $P_1$, and $P_2$ were adjusted by changing a coating weight per unit area on the positive electrode plate and a coating weight per unit area on the negative electrode plate, and preparation parameters were recorded in Table 1.

In Example 1-9 to Example 1-12, an active substance material artificial graphite on an outer convex surface of the first bent section in the negative electrode plate in Example 1-8 was partially replaced with a silicon material; in addition, the coating weight was reduced, and the capacity per unit area was unchanged; where in the silicon material after replacement, silicon percentages were sequentially 1%, 3%, 7.5%, and 15% based on a mass of the coating layer of the negative electrode plate; and preparation parameters were recorded in Table 1.

Example 2-1 to Example 2-23

Example 2-1 to Example 2-23 differed from Example 1-2, Example 1-5, and Example 1-8 in the electrolyte. In a dry argon atmosphere glove box, substances including 12.5% by mass of 1 mol/L $LiPF_6$, 20% by mass of ethylene carbonate (EC), (1-12.5%-s%-m%-20%) by mass of diethyl carbonate (DEC), and s% by mass of an organic solvent were weighed. The weighed substances were mixed, then a compound represented by formula I with a corresponding mass percentage of m% was added, dissolved, and fully stirred, $LiPF_6$ was added, and the mixture was mixed to uniformity to obtain the electrolyte. Specific preparation parameters were recorded in Table 2.

Performance test

1. A lithium precipitation amount test included the following steps.

A lithium-ion battery was put into high-low temperature chamber with a temperature adjusted to 5°C, left standing for 60 min, charged to 4.25 V at a constant current of 1C, processed to a current of 0.02C at a constant voltage, left standing for 15 min, discharged to 2.8 V at 0.5C, left standing for 15 min, still discharged to 2.8 V at 0.1C, left standing for 15 min, still discharged to 2.8 V at 0.05C, left standing for 15 min, still discharged to 2.8 V at 0.005C, and left standing for 30 min; a sum of discharge capacities at 0.5C, 0.1C, 0.05C, and 0.005C was recorded as C0; this cycle was repeated 10 times; a sum of discharge capacities at 0.5C, 0.1C, 0.05C, and 0.005C in the 10th cycle was recorded as C10; and the lithium precipitation amount was (C0-C10)/C0.

2. A trough voltage test includes the following steps.

A lithium-ion battery was put into a high-low temperature chamber with a temperature adjusted to -10°C, left standing for 60 min, charged to 4.25 V at a constant current of 1C, processed to a current of 0.02C at a constant voltage, left standing for 15 min, and then discharged to 2.8 V at 6C; and a voltage at a lowest point of a voltage drop process during an initial discharge process was recorded as a trough voltage, where the trough voltage reflected the power performance of the electrochemical apparatus at low temperatures, as shown in FIG. 2.

**Table 1**

| Group | $N_1$ | $N_1$ surface coating weight ($mg/cm^2$) | Mass percentage of silicon element (%) | $P_1$ | $N_2$ | $P_2$ | $N_1/P_1$ | $N_2/P_2$ | $\frac{N_2/P_2}{N_1/P_1}$ | Lithium precipitation amount (%) |
|---|---|---|---|---|---|---|---|---|---|---|
| Comparative example 1-1 | 2.49 | 7.4 | \ | 2.30 | 2.49 | 2.30 | 1.083 | 1.083 | 1 | 2.00 |
| Comparative example 1-2 | 2.06 | 6.1 | \ | 2.01 | 2.45 | 2.01 | 1.025 | 1.219 | 1.189 | 2.30 |
| Comparative example 1-3 | 2.5 | 7.5 | \ | 1.92 | 2.16 | 2.01 | 1.302 | 1.075 | 0.825 | 2.12 |
| Example 1-1 | 2.29 | 6.6 | \ | 1.92 | 2.12 | 2.05 | 1.193 | 1.034 | 0.867 | 0.30 |
| Example 1-2 | 2.50 | 7.5 | \ | 2.01 | 2.16 | 2.01 | 1.244 | 1.075 | 0.864 | 0.35 |
| Example 1-3 | 2.40 | 7.0 | \ | 2.01 | 2.16 | 2.01 | 1.194 | 1.075 | 0.900 | 0.23 |
| Example 1-4 | 2.29 | 6.6 | \ | 2.01 | 2.16 | 2.01 | 1.139 | 1.075 | 0.943 | 0.18 |
| Example 1-5 | 2.09 | 5.8 | \ | 2.01 | 2.07 | 2.01 | 1.040 | 1.030 | 0.990 | 0.05 |
| Example 1-6 | 2.29 | 6.6 | \ | 2.01 | 2.23 | 2.01 | 1.139 | 1.109 | 0.974 | 0.16 |
| Example 1-7 | 2.16 | 6.1 | \ | 1.96 | 2.16 | 2.01 | 1.102 | 1.075 | 0.975 | 0.12 |
| Example 1-8 | 2.16 | 6.1 | \ | 1.96 | 2.16 | 1.99 | 1.102 | 1.085 | 0.985 | 0.13 |
| Example 1-9 | 2.16 | 5.7 | 1 | 1.96 | 2.16 | 1.99 | 1.102 | 1.085 | 0.985 | 0.12 |
| Example 1-10 | 2.16 | 5.0 | 3 | 1.96 | 2.16 | 1.99 | 1.102 | 1.085 | 0.985 | 0.11 |
| Example 1-11 | 2.16 | 3.8 | 7.5 | 1.96 | 2.16 | 1.99 | 1.102 | 1.085 | 0.985 | 0.08 |
| Example 1-12 | 2.16 | 2.8 | 15 | 1.96 | 2.16 | 1.99 | 1.102 | 1.085 | 0.985 | 0.07 |

It can be learned from Table 1 that compared with Comparative example 1 and Comparative example 3, Example 1-1 to Example 1-12 have a smaller lithium precipitation amount, indicating that adjusting $N_1$, $P_1$, $N_2$, and $P_2$ to satisfy 0.850 $\le \frac{N_2/P_2}{N_1/P_1} \le 0.99$ can provide sufficient lithium intercalation space and reduce the lithium precipitation amount. A large value and a small value of $\frac{N_2/P_2}{N_1/P_1}$ both affect the lithium precipitation amount. $\frac{N_2/P_2}{N_1/P_1}$ is within the foregoing range, and with gradual increase of $\frac{N_2/P_2}{N_1/P_1}$, the lithium precipitation amount is reduced gradually.

It can be learned from Example 1-1 to Example 1-12 that $N_1/P_1$ is between 1.04 and 1.25, which can further reduce the lithium precipitation amount.

In the foregoing examples, the coating weight of the negative electrode plate is within a range from 2.0 $mg/cm^2$ to 12 $mg/cm^2$, which helps to further improve the structural stability of the electrode plate and reduce the lithium precipitation amount.

**Table 2**

| Example | $\frac{N_2/P_2}{N_1/P_1}$ | $N_1/P_1$ | Compound represented by formula I (m%) | Organic solvent (s%) | $100*m/(N_1/P_1)$ | $\frac{\sum_{i=1}^{n}\frac{m_i}{M_i}}{\sum_{j=1}^{k}\frac{m_j}{M_j}}$ | Lithium precipitation amount (%) | Trough voltage (V) |
|---|---|---|---|---|---|---|---|---|
| Example 1-2 | 0.864 | 1.248 | \ | \ | 0 | \ | 0.35 | 2.93 |
| Example 1-5 | 0.99 | 1.043 | \ | \ | 0 | \ | 0.05 | 2.96 |
| Example 1-8 | 0.985 | 1.102 | \ | \ | 0 | \ | 0.13 | 2.95 |
| Example 2-1 | 0.985 | 1.102 | 0.5% Formula I-2 | \ | 0.45 | \ | 0.13 | 2.93 |
| Example 2-2 | 0.864 | 1.248 | 1% Formula I-2 | \ | 0.80 | \ | 0.11 | 3.06 |
| Example 2-3 | 0.985 | 1.102 | 4.2% Formula I-2 | \ | 3.81 | \ | 0.06 | 3.10 |
| Example 2-4 | 0.99 | 1.043 | 4.2% Formula I-2 | \ | 4.03 | \ | 0.03 | 3.12 |
| Example 2-5 | 0.985 | 1.102 | 8% Formula I-2 | \ | 7.25 | \ | 0.05 | 3.13 |
| Example 2-6 | 0.985 | 1.102 | 10% Formula I-2 | \ | 9.07 | \ | 0.04 | 3.15 |
| Example 2-7 | 0.985 | 1.102 | 15% Formula I-2 | \ | 13.60 | \ | 0.03 | 3.16 |
| Example 2-8 | 0.99 | 1.043 | 20% Formula I-2 | \ | 19.18 | \ | 0.03 | 3.15 |
| Example 2-9 | 0.99 | 1.043 | 21% Formula I-2 | \ | 20.13 | \ | 0.05 | 3.11 |
| Example 2-10 | 0.985 | 1.102 | 5% Formula I-4 | \ | 4.53 | \ | 0.09 | 3.11 |
| Example 2-11 | 0.985 | 1.102 | 3% Formula I-2 + 2% Formula I-4 | \ | 4.53 | \ | 0.07 | 3.10 |
| Example 2-12 | 0.985 | 1.102 | \ | 20% EMC | \ | \ | 0.10 | 3.16 |
| Example 2-13 | 0.985 | 1.102 | \ | 40% EMC | \ | \ | 0.08 | 3.18 |
| Example 2-14 | 0.985 | 1.102 | \ | 60% EMC | \ | \ | 0.05 | 3.22 |
| Example 2-15 | 0.985 | 1.102 | \ | 65% EMC | \ | \ | 0.09 | 3.18 |
| Example 2-16 | 0.985 | 1.102 | \ | 20% EP | \ | \ | 0.08 | 3.19 |
| Example 2-17 | 0.985 | 1.102 | \ | 20% EMC +5% EP | \ | \ | 0.06 | 3.20 |

(continued)

| Example | $\frac{N_2/P_2}{N_1/P_1}$ | $N_1/P_1$ | Compound represented by formula I (m%) | Organic solvent (s%) | 100*m/ ($N_1/P_1$) | $\frac{\sum_{i=1}^{n}\frac{m_i}{M_i}}{\sum_{j=1}^{k}\frac{m_j}{M_j}}$ | Lithium precipitation amount (%) | Trough voltage (V) |
|---|---|---|---|---|---|---|---|---|
| Example 2-18 | 0.985 | 1.102 | \ | 20% EMC +5% Formula II-5 | \ | \ | 0.08 | 3.22 |
| Example 2-19 | 0.985 | 1.102 | \ | 20% EMC +5% Formula II-6 | \ | \ | 0.02 | 3.23 |
| Example 2-20 | 0.985 | 1.102 | 5% Formula I-2 | 40% EMC | 4.53 | 0.07 | 0.02 | 3.25 |
| Example 2-21 | 0.985 | 1.102 | 3% Formula I-2 + 2% Formula I-4 | 20% EMC + 5% Formula II-5 | 4.53 | 0.11 | 0.01 | 3.30 |
| Example 2-22 | 0.985 | 1.102 | 18% Formula I-2 | 20% EP | 16.33 | 0.49 | 0.03 | 3.21 |
| Example 2-23 | 0.985 | 1.102 | 0.8% Formula I-2 | 60% Formula II-2 | 0.73 | 0.01 | 0.02 | 3.22 |

It can be learned from Table 2 that, under a condition that when the values of $N_1/P_1$ or the values of $\frac{N_2/P_2}{N_1/P_1}$ are the same, as compared with Example 1-2, Example 1-5, and Example 1-8, the electrolytes in Example 2-1 to Example 2-11 are added with the compound represented by formula I, the lithium precipitation amount in the battery is reduced significantly, and the trough voltage of the battery is increased significantly. This indicates that adding the compound represented by formula I to the electrolyte in the battery can further reduce the lithium precipitation amount and can also increase the trough voltage during low-temperature discharge. This is because the compound represented by formula I can form an inorganic salt (such as $Li_3N$, $Li_2S$, or LiF) film on an electrode interface, reducing side reactions and impedance, thereby reducing the occurrence of lithium precipitation. In addition, the formed inorganic salt also has good lithium ion transport property, which can reduce polarization caused by lithium ion transport and increase the trough voltage of the battery during low-temperature discharge.

In Example 2-1 to Example 2-11, the amount of the compound represented by formula I added to the electrolyte is within an appropriate range, which helps to reduce the lithium precipitation amount and also helps to increase the trough voltage of the battery during low-temperature discharge. It can be learned from Example 2-1, Example 2-3, and Examples 2-5 to 2-7 that, within the foregoing range, as the amount of the compound represented by formula I added to the electrolyte increases, the lithium precipitation amount is reduced gradually, and the trough voltage is increased gradually. In the foregoing examples, as compared with Example 1-8, in Example 2-1, a smaller amount of compound represented by formula I-2 is added, and the corresponding lithium precipitation amount and trough voltage have insignificant changes.

In Example 2-1 to Example 2-11, $\frac{100*m}{N_1/P_1}$ is within an appropriate range, facilitating improvement in lithium precipitation amount and trough voltage of the battery. In Example 2-1 and Example 2-9, a value of $\frac{100*m}{N_1/P_1}$ is not within the range of 0.8 to 19.2, which does not significantly reduce the lithium precipitation amount and increase the trough voltage.

As compared with Example 1-8, in Example 2-12 to Example 2-23, an organic solvent is added, the corresponding lithium precipitation amounts are all reduced, and the trough voltages of the batteries during low-temperature discharge are all increased. The organic solvent has low viscosity and surface tension, which helps to improve the infiltration performance of the electrolyte into electrode plates and helps to reduce the ion migration impedance, thereby

reducing the lithium precipitation amount and also increasing the trough voltage during low-temperature discharge.

As compared with Example 2-1, Example 2-11, Example 2-13, and Example 2-18, the compound represented by formula I and the organic solvent are both added in Example 2-20 to Example 2-23, the lithium precipitation amount is significantly reduced, and the trough voltage of the battery during low-temperature discharge is increased. This indicates that the compound represented by formula I and the organic solvent present in the electrolyte can jointly provide improvement for the battery in the lithium precipitation amount and trough voltage during low-temperature discharge.

The descriptions disclosed above are merely preferred embodiments of this application, and certainly cannot constitute any limitation on this application. Therefore, equivalent changes made in accordance with this application still fall within the scope of this application.

## Claims

1. An electrochemical apparatus, comprising an electrode assembly (10), **characterized in that**, the electrode assembly (10) is a wound structure; the electrode assembly (10) comprises a positive electrode plate (12), a negative electrode plate (11), and a separator (13) located between the positive electrode plate (12) and the negative electrode plate (11); the positive electrode plate (12) comprises a positive electrode current collector (121), a first positive electrode active material layer (122), and a second positive electrode active material layer (123); the positive electrode current collector (121) comprises a first surface (1211) facing a winding center of the electrode assembly (10) and a second surface (1212) facing away from the first surface (1211); the first positive electrode active material layer (122) is disposed on the first surface (1211); the second positive electrode active material layer (123) is disposed on the second surface (1212); the negative electrode plate (11) comprises a negative electrode current collector (111), a first negative electrode active material layer (112), and a second negative electrode active material layer (113); the negative electrode current collector (111) comprises a third surface (1111) facing the winding center (O) of the electrode assembly (10) and a fourth surface (1112) facing away from the third surface (1111); the first negative electrode active material layer (112) is disposed on the third surface (1111); and the second negative electrode active material layer (113) is disposed on the fourth surface (1112);

   wherein the electrode assembly (10) comprises a flat region (S) and a bent region (C) connected to each other; in the bent region (C), the negative electrode plate (11) comprises a first bent section (11a) and a second bent section (11b); the positive electrode plate (12) includes a third bent section (12a); the first bent section (11a), the third bent section (12a), and the second bent section (11b) are sequentially disposed in a direction away from the winding center (O); and the electrode assembly (10) satisfies the following relation:

   $$0.850 \leq \frac{N_2/P_2}{N_1/P_1} \leq 0.99,$$

   wherein
   $N_1$ represents a capacity per unit area of the second negative electrode active material layer (113) in the first bent section (11a); $P_1$ represents a capacity per unit area of the first positive electrode active material layer (122) in the third bent section (12a); $N_2$ represents a capacity per unit area of the first negative electrode active material layer (112) in the second bent section (11b); and $P_2$ represents a capacity per unit area of the second positive electrode active material layer (123) in the third bent section (12a).

2. The electrochemical apparatus according to claim 1, **characterized in that**, $1.04 \leq N_1/P_1 \leq 1.25$.

3. The electrochemical apparatus according to claim 1 or 2, **characterized in that**, a coating weight per unit area of each of the first negative electrode active material layer (112) and the second negative electrode active material layer (113) is 2.0 mg/cm$^2$ to 12 mg/cm$^2$.

4. The electrochemical apparatus according to any one of claims 1 to 3, **characterized in that**, further comprising an electrolyte, and the electrolyte comprises a compound represented by formula I:

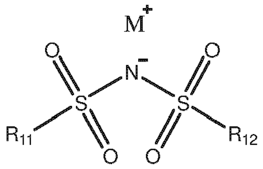 (formula I),

wherein $M^+$ is selected from one of $Li^+$, $Na^+$, $K^+$, or $Cs^+$ cations; R11 and R12 are independently selected from -CN, a halogen atom, an alkyl group substituted by a halogen atom, an alkenyl group substituted by a halogen atom, or an alkynyl group substituted by a halogen atom, wherein the number of carbon atoms in the alkyl group are 1 to 4, and the numbers of carbon atoms in the alkenyl group and alkynyl group are 2 to 4.

5. The electrochemical apparatus according to claim 4, **characterized in that**, the compound represented by formula I is at least one selected from compounds represented by formula I-1 to formula I-7:

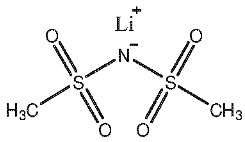 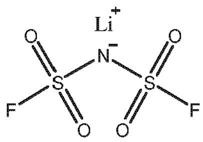 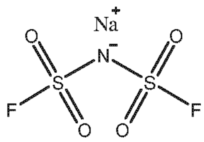 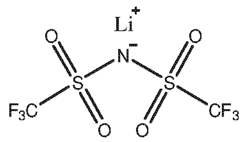

(formula I-1), (formula I-2), (formula I-3), (formula I-4),

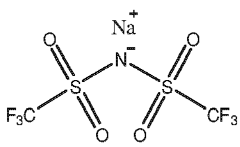 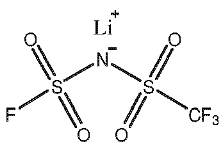 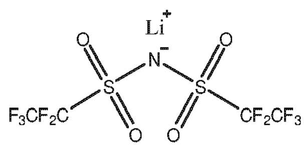

formula I-5, formula I-6, or formula I-7.

6. The electrochemical apparatus according to claim 4, **characterized in that**, a mass percentage of the compound represented by formula I in the electrolyte is m, and the electrolyte satisfies at least one of the following conditions:

(1)

$$1\%\leq m\leq 20\%;$$

or
(2)

$$0.8\leq\frac{100*m}{N_1/P_1}\leq 19.2.$$

7. The electrochemical apparatus according to any one of claims 1 to 6, **characterized in that**, the electrolyte further comprises an organic solvent; the organic solvent comprises at least one of ethyl methyl carbonate, ethyl acetate, ethyl propionate, fluorinated ethyl methyl carbonate, fluorinated ethyl acetate, or a fluorinated ethyl propionate compound; and a mass percentage of the organic solvent in the electrolyte is 20% to 60%.

8. The electrochemical apparatus according to claim 7, **characterized in that**, the fluorinated ethyl methyl carbonate is at least one selected from a compound represented by formula II-1 or a compound represented by formula II-2; the fluorinated ethyl acetate is at least one selected from a compound represented by formula II-3 to a compound represented by formula II-5; and the fluorinated ethyl propionate is at least one selected from a compound represented by formula II-6 or a compound represented by formula II-7:

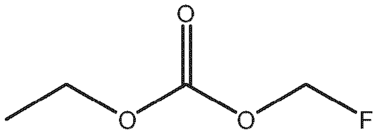
formula II-1,

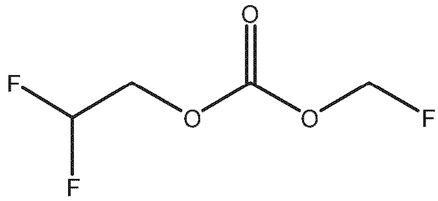
formula II-2,

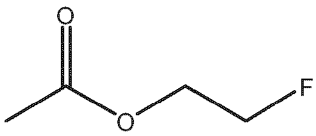
formula II-3,

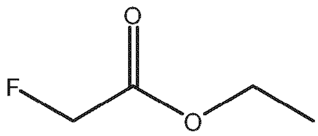
formula II-4,

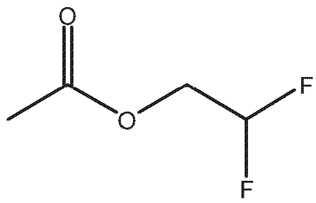
formula II-5,

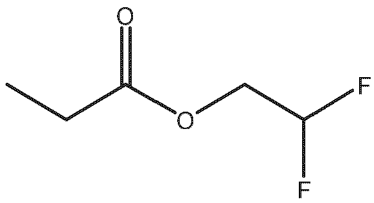
formula II-6,

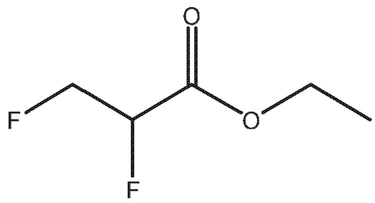
or formula II-7.

9. The electrochemical apparatus according to claim 7, **characterized in that**, the compound represented by formula I and the organic solvent satisfy the following relation:

$$0.01 \leq \frac{\sum_{i=1}^{n} \frac{m_i}{M_i}}{\sum_{j=1}^{k} \frac{m_j}{M_j}} \leq 0.5,$$

wherein $m_i$ represents a mass of the i-th one of a plurality of compounds represented by formula I in the electrolyte; $M_i$ represents a relative molecular mass of the i-th compound represented by formula I; $m_j$ represents a mass of the j-th one of a plurality of organic solvents in the electrolyte; and $M_j$ represents a relative molecular mass of the j-th organic solvent.

10. The electrochemical apparatus according to claims 1 to 9, **characterized in that**, the electrolyte further comprises ethylene carbonate, and a mass percentage of the ethylene carbonate in the electrolyte is 5% to 30%.

11. The electrochemical apparatus according to claim 7, **characterized in that**, the first negative electrode active material layer (112) and the second negative electrode active material layer (113) each comprise a silicon-containing active substance; the silicon-containing active substance contains the silicon element; and a mass percentage of the silicon element is 1% to 15% based on a mass of the first negative electrode active material layer (112) or the second negative electrode active material layer (113).

12. An electronic apparatus, comprising the electrochemical apparatus according to any one of claims 1 to 11.

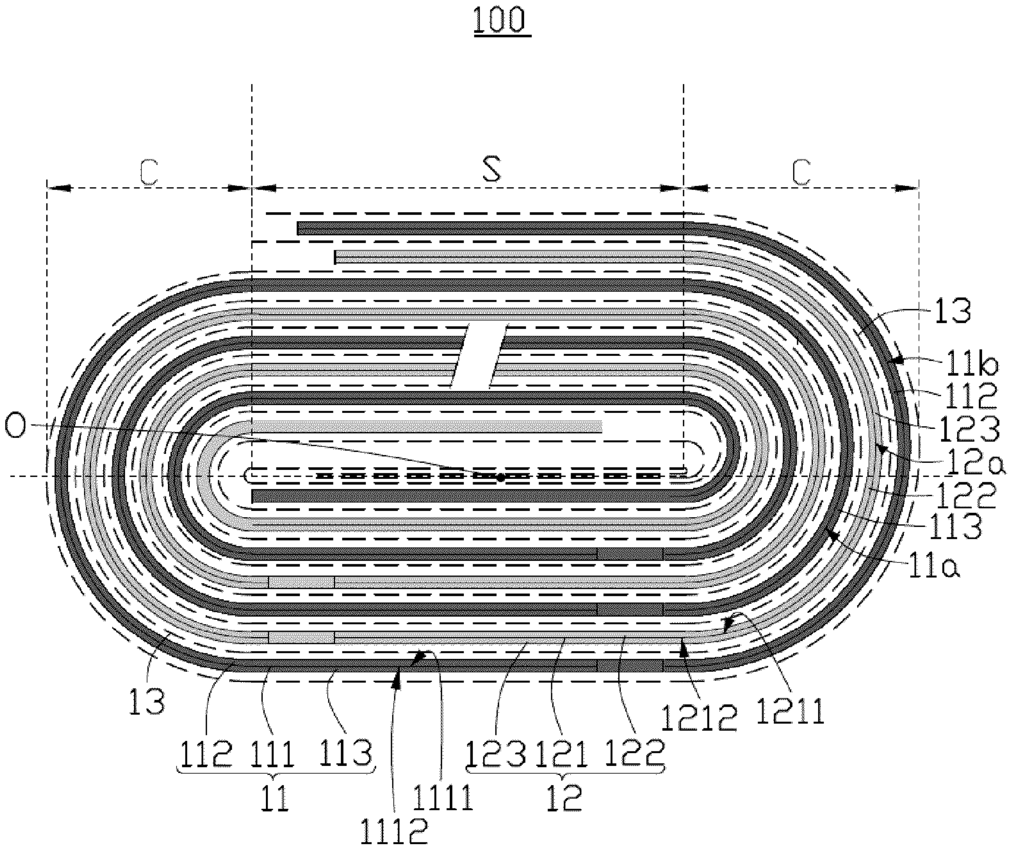
100
C
S
C
O
13
11b
112
123
12a
122
113
11a
1211
1212
13
112 111 113
11
1112
1111
123 121 122
12

FIG. 1

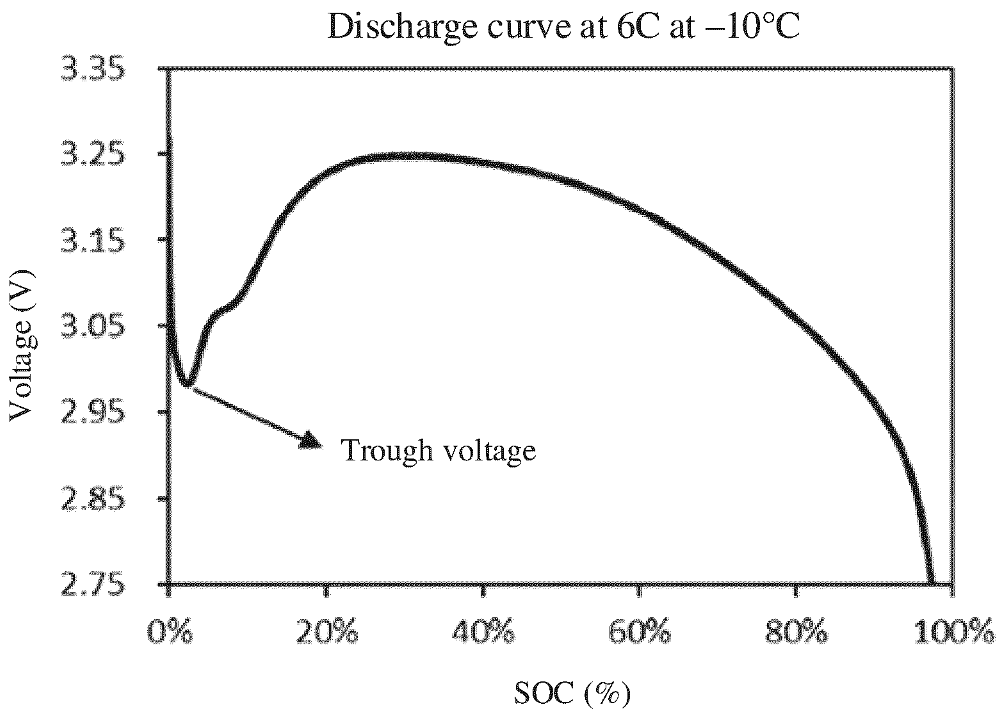
Discharge curve at 6C at –10°C
Voltage (V)
3.35
3.25
3.15
3.05
2.95
2.85
2.75
Trough voltage
0%
20%
40%
60%
80%
100%
SOC (%)

FIG. 2

Europäisches Patentamt
European Patent Office
Office européen des brevets

# EUROPEAN SEARCH REPORT

Application Number
EP 25 16 7221

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 888 751 A (NINGDE CONTEMPORARY AMPEREX TECH CO LTD) 13 October 2023 (2023-10-13) * pages 24-29; claims 8-12; figure 2; examples 1-27 * | 1-12 | INV. H01M10/0587 H01M10/0525 H01M10/0568 H01M10/0569 H01M10/04 H01M4/134 H01M4/38 |
| A | CN 116 960 471 A (NINGDE CONTEMPORARY AMPEREX TECH CO LTD) 27 October 2023 (2023-10-27) * pages 11-28; claims 1-9; figure 5 * | 1-12 | |

TECHNICAL FIELDS SEARCHED (IPC)
H01M

The present search report has been drawn up for all claims

1

| Place of search | Date of completion of the search | Examiner |
|---|---|---|
| Munich | 18 July 2025 | Girard, Gaëtan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 16 7221

This annex lists the patent family members relating to the patent documents cited in the above-mentioned European search report. The members are as contained in the European Patent Office EDP file on
The European Patent Office is in no way liable for these particulars which are merely given for the purpose of information.

18-07-2025

| Patent document cited in search report | Publication date | Patent family member(s) | Publication date |
|---|---|---|---|
| CN 116888751 A | 13-10-2023 | CN 116888751 A | 13-10-2023 |
| | | US 2025226399 A1 | 10-07-2025 |
| | | WO 2024145757 A1 | 11-07-2024 |
| CN 116960471 A | 27-10-2023 | NONE | |

EPO FORM P0459

For more details about this annex : see Official Journal of the European Patent Office, No. 12/82